# EUROPEAN PATENT APPLICATION

(11) **EP 4 592 878 A1**
(43) Date of publication of application: **30.07.2025**
(21) Application number: 25153379.0
(22) Date of filing: 22.01.2025
(51) Int. Cl.: G06F 21/57

(54) **VERIFYING OPERATING SYSTEM DISK INTEGRITY FOR VIRTUAL MACHINES**

(30) Priority: 23.01.2024 US 202418420159
(71) Applicant: Microsoft Technology Licensing, LLC, Redmond, WA 98052-6399 (US)
(72) Inventor: Orsini, Christopher Ryan, Redmond, WA, 98052 (US); Tikoo, Vikas Amar, Redmond, WA, 98052 (US); Shivaganga Nagaraju, Gangadhara Swamy, Redmond, WA, 98052 (US); Chitnis, Pushkar V., Redmond, WA, 98052 (US)
(74) Representative: Grünecker Patent- und Rechtsanwälte PartG mbB

(57) **Abstract**

Described are examples for verifying integrity of an operating system (OS) disk of a virtual machine including initializing the virtual machine including performing, by an initial firmware, a measured boot to measure each of a bootloader and a kernel into a platform configuration register (PCR), measuring, during the measured boot, a component of the OS disk of the virtual machine into the PCR, and providing, based on a received request, a value in the PCR for verifying integrity of the virtual machine.

## Description

### BACKGROUND

Cloud-based computing platforms are provided where processing and/or memory resources of physical machines can be shared and utilized to provide virtual machines (VMs) that can be initialized and operated for executing workloads. Confidentiality for the VMs may be desired to ensure data in use at the VMs is not compromised or shared outside of the VM. Integrity protection measurements can be provided by secure boot and measured boot performed on the VM, where an initial firmware (e.g., extensible firmware interface (EFI), unified EFI (UEFI), etc.) of the VM can perform the secure boot and/or measured boot. In an example, each component in the boot flow for the VM, up to an initial ramdisk (initrd), which can include one or more bootloaders, a kernel, etc., can be verified by secure boot and measured into a platform configuration register (PCR) by measured boot for later attestation of these components of the boot flow. This process, however, may not provide integrity for the operating system (OS) disk or image executing on the VM.

OS disk information may be added to the initrd to provide verification for the OS disk, but any changes to the initrd can require to initrd to be rebuilt and resigned before being used in the measured boot process to provide attestation for the VM. In addition, a universal kernel image (UKI) used in the secured boot process must be rebuilt and resigned if changes are made to the initrd.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an example, a device for verifying integrity of an operating system (OS) disk of a virtual machine is provided that includes one or more memories storing instructions, and one or more processors coupled to the one or more memories. The one or more processors are configured to execute the instructions to initialize the virtual machine including performing, by an initial firmware, a measured boot to measure each of a bootloader, a kernel, and a component of the OS disk of the virtual machine into a platform configuration register (PCR), measure, by the initrd, a component of an operating system (OS) disk of the virtual machine into the PCR, and provide, based on a received request, a value in the PCR for verifying integrity of the virtual machine.

In another example, a method for verifying integrity of an OS disk of a virtual machine is provided that includes initializing the virtual machine including performing, by an initial firmware, a measured boot to measure each of a bootloader and a kernel into a PCR, measuring, during the measured boot, a component of the OS disk of the virtual machine into the PCR, and providing, based on a received request, a value in the PCR for verifying integrity of the virtual machine.

In another example, a non-transitory computer-readable device is provided that stores instructions that, when executed by at least one computing device, cause the at least one computing device to perform operations for verifying integrity of an OS disk of a virtual machine. The operations include initializing the virtual machine including performing, by an initial firmware, a measured boot to measure each of a bootloader, a kernel, into a PCR, measuring, during the measured boot, a component of the OS disk of the virtual machine into the PCR, and providing, based on a received request, a value in the PCR for verifying integrity of the virtual machine.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Figure 1 is a schematic diagram of an example of one or more devices for performing functions related to ensuring integrity of a virtual machine (VM) based on an operating system (OS) disk of the VM, in accordance with aspects described herein.
Figure 2 illustrates an example of a process for configuring an OS disk, which may be performed by one or more devices, in accordance with aspects described herein.
Figure 3 is a flow diagram of an example of a method for verifying integrity of a VM based on an OS disk, in accordance with aspects described herein.
Figure 4 is a flow diagram of an example of a method for providing data to a VM based on verifying integrity of the VM, in accordance with aspects described herein.
Figure 5 is a schematic diagram of an example of a device for performing functions described herein, in accordance with aspects described herein.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known components are shown in block diagram form in order to avoid obscuring such concepts.

This disclosure describes various examples related to verifying virtual machine (VM) integrity based on an operating system (OS) disk of the VM. In an example, the VM can be initialized by performing a measured boot to measure, e.g., via an initial firmware (e.g., extensible firmware interface (EFI), unified EFI (UEFI), etc.), various components of a boot flow for the VM, such as one or more bootloaders or shims, a kernel, an initial ramdisk (initrd), etc. into a platform configuration register (PCR). A PCR can be provided in a trusted platform module (TPM) as a register on the device that stores a system or software state (e.g., configuration data and/or system measurements), as described further herein. In addition, the initrd can be configured to measure a component of the OS disk of the VM into the PCR, where the component of the OS disk may include a manifest file. In this regard, the initrd does not require a change (and does not require associated rebuilding and resigning) if the OS disk itself is changed. Rather, the initrd can measure the OS disk into the PCR based on the separate component during boot of the VM, which allows the OS disk to change without requiring initrd changes to reflect the changed OS disk. In addition, the measured component of the OS disk can accordingly be used during attestation to verify integrity of the VM based on the PCR.

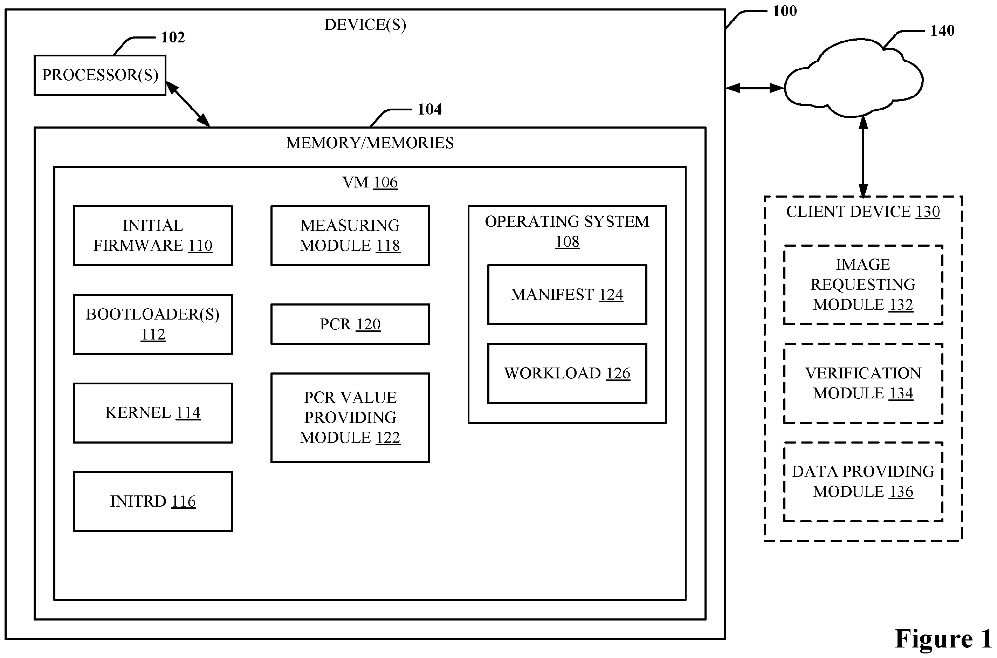

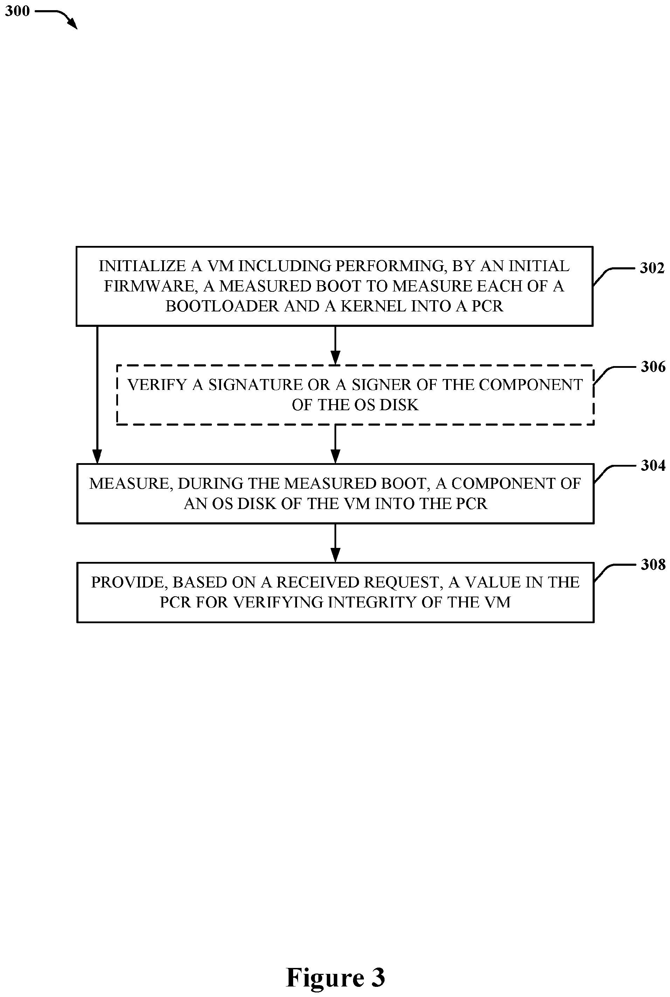

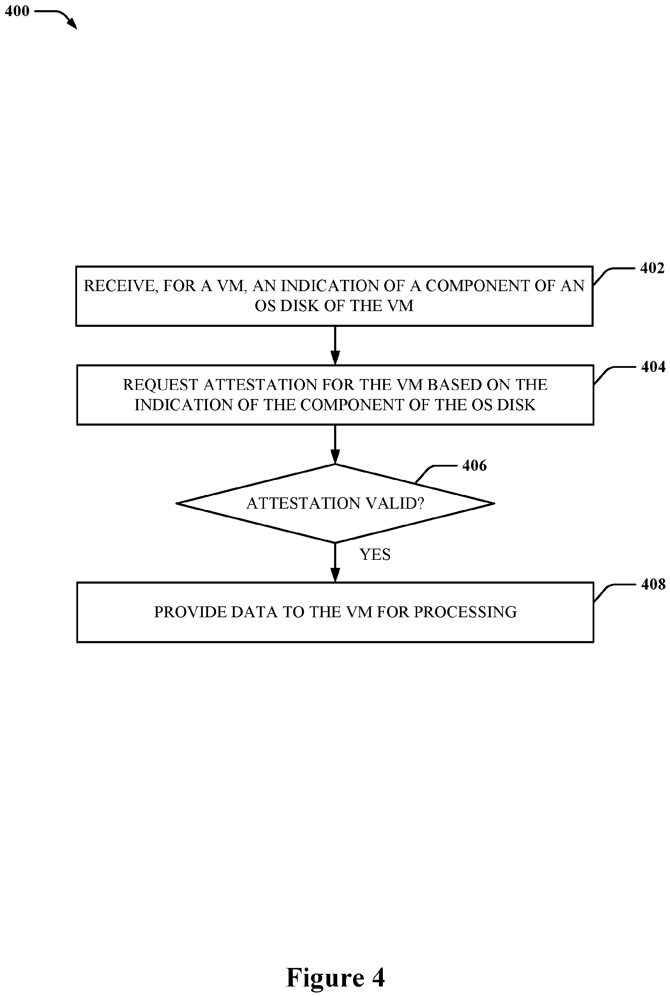

Turning now to Figures 1-5, examples are depicted with reference to one or more components and one or more methods that may perform the actions or operations described herein, where components and/or actions/operations in dashed line may be optional. Although the operations described below in Figures 3 and 4 are presented in a particular order and/or as being performed by an example component, the ordering of the actions and the components performing the actions may be varied, in some examples, depending on the implementation. Moreover, in some examples, one or more of the actions, functions, and/or described components may be performed by a specially-programmed processor, a processor executing specially-programmed software or computer-readable media, or by any other combination of a hardware component and/or a software component capable of performing the described actions or functions.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

As used herein, a memory, at least one memory, and/or one or more memories, individually or in combination, configured to store or having stored thereon instructions executable by one or more processors for performing a plurality of actions is meant to include at least two different memories able to store different, overlapping or non-overlapping subsets of the instructions for performing different, overlapping or non-overlapping subsets of the plurality actions, or a single memory able to store the instructions for performing all of the plurality of actions. In one non-limiting example of one or more memories, individually or in combination, being able to store different subsets of the instructions for performing different ones of the plurality of actions, a description of a memory, at least one memory, and/or one or more memories configured or operable to store or having stored thereon instructions for performing actions X, Y, and Z may include at least a first memory configured or operable to store or having stored thereon a first subset of instructions for performing a first subset of X, Y, and Z (e.g., instructions to perform X) and at least a second memory configured or operable to store or having stored thereon a second subset of instructions for performing a second subset of X, Y, and Z (e.g., instructions to perform Y and Z). Alternatively, a first memory, and second memory, and a third memory may be respectively configured to store or have stored thereon a respective one of a first subset of instructions for performing X, a second subset of instruction for performing Y, and a third subset of instructions for performing Z. It should be understood that any combination of one or more memories each may be configured or operable to store or have stored thereon any one or any combination of instructions executable by one or more processors to perform any one or any combination of a plurality of actions. Moreover, one or more processors may each be coupled to at least one of the one or more memories and configured or operable to execute the instructions to perform the plurality of actions. For instance, in the above non-limiting example of the different subset of instructions for performing actions X, Y, and Z, a first processor may be coupled to a first memory storing instructions for performing action X, and at least a second processor may be coupled to at least a second memory storing instructions for performing actions Y and Z, and the first processor and the second processor may, in combination, execute the respective subset of instructions to accomplish performing actions X, Y, and Z. Alternatively, three processors may access one of three different memories each storing one of instructions for performing X, Y, or Z, and the three processor may in combination execute the respective subset of instruction to accomplish performing actions X, Y, and Z. Alternatively, a single processor may execute the instructions stored on a single memory, or distributed across multiple memories, to accomplish performing actions X, Y, and Z.

Figure 1 is a schematic diagram of an example of one or more devices 100 (e.g., one or more computing devices) for performing functions related to ensuring integrity of a VM based on an OS disk of the VM. In an example, device(s) 100 can include one or more processors 102 and/or memory/memories 104 configured to execute or store instructions or other parameters related to providing a VM 106. For example, processor(s) 102 and memory/memories 104 may be separate components communicatively coupled by a bus (e.g., on a motherboard or other portion of a computing device, on an integrated circuit, such as a system on a chip (SoC), etc.), components integrated within one another (e.g., processor(s) 102 can include the memory/memories 104 as an on-board component), and/or the like. Memory/memories 104 may store instructions, parameters, data structures, etc. for use/execution by processor(s) 102 to perform functions described herein. In another example, processor(s) 102 and/or memory/memories 104 can be distributed over multiple devices 100 or physical computing nodes in a network (e.g., in a cloud-based computing platform) for providing the functions of the various components described herein.

In one example, the VM 106 can execute an operating system 108 for operating resources of the VM 106, such as the processor(s) 102 and/or memory/memories 104, to provide certain functionality, execute applications, etc. To initialize the VM 106, the VM 106 may include an initial firmware 110, such as a EFI, UEFI, etc., that can perform a boot flow to boot the VM 106 and/or the corresponding OS 108. In an example, initial firmware 110 can support a secure boot and/or measured boot process to boot one or more components while verifying the components during the boot (e.g., based on a security key, such as a signed universal kernel image (UKI)) and/or to measure the components to support later attestation of the components of the VM. For example, the UKI can include a file that packages the boot loader, kernel, kernel command line, initrd, etc. The additional components of the boot flow for the VM 106 can include one or more bootloaders 112, a kernel 114, and/or an initrd 116. For example, the one or more bootloaders can include a shim bootloader for some Oss, which can be booted before the main bootloader for the OS. The shim bootloader can be used to verify a signature of the main bootloader and/or kernel 114, etc.

The VM 106 can also include a measuring module 118 for measuring one or more components of the boot flow into a PCR 120, and/or an PCR value providing module 122 for providing the value stored in PCR 120 for verifying integrity of the VM 106. In an example, the operating system 108 can include a manifest that describes the OS 108 or an associated OS disk, on which the OS executes, and/or a workload 126 that executes via the OS 108. In an example, the VM 106 can be provisioned for the purpose of executing the workload 126, and provisioning of the VM 106 (or the associated workload image) can be requested by a client device 130 via a network 140.

In an example, the client device 130 can include an image requesting module 132 for requesting an image from a server that manages cloud-computing devices, such as VMs, from the device(s) 100, and/or the like, a verification module 134 for requesting or performing verification of integrity of the VM 106, and/or a data providing module 136 for providing data to the VM 106 for use by the workload 126 to perform some function on the data, which can be conditioned on verifying integrity of the VM 106. Though not depicted, client device 130 may additionally include one or more processors, one or more memories, etc., for providing corresponding functionality described herein, though these components are not shown for ease of explanation. For example, image requesting module 132 can request an image, which can cause the VM 106 to be initialized to provide the workload 126 corresponding to the image. As part of initializing the VM 106, VM 106 can execute the initial firmware 110, as described, to execute the boot flow for the VM 106 and/or to provide secure boot and/or measured boot.

For example, in secure boot, each component up to the initrd 116 (e.g., bootloader(s) 112, kernel 114, and initrd 116) can be verified using a UKI that is signed by the OS distribution of OS 108. If one or more of the components cannot be verified based on the signed UKI, an error can be logged in a log file on the VM 106 and/or the boot flow can terminate. For example, in measured boot, each component up to the initrd 116 (e.g., bootloader(s) 112, kernel 114, and initrd 116) can be measured into the PCR 120, and the contents of the PCR 120 can later be used for attestation of the components in the boot flow. Aspects described herein relate to additionally measuring the manifest 124 (or another OS disk component) into the PCR 120 as well to allow for attesting to the OS disk (e.g., the image) itself, e.g., to prevent tampering at the image level.

For example, a manifest 124 file can have an array of partitions of the OS 108 image in mount order, and can reside on the EFI system partition (ESP). The ESP partition and/or OS 108 image can be in memory/memories 104, on a hard disk or solid state drive (SSD) of the device(s) 100, etc. For each partition entry, the manifest 124 can indicate various information, such as partition information (e.g., partition number, universally unique identifier (UUID), filesystem, etc.), partition protection information, partition mount information (e.g., mount point, overlay and overlay configuration for upper or lower directory, other mount options, etc.), and/or the like. The partition protection information can be blank or none be default. In an example, each protection type can have specific protection configurations (e.g., verity may have root hash (and potentially a signer) and verity configurations (e.g., optimizations, forward error correction (FEC), reboot on failure, etc.), encryption can have key information (e.g., key protector information) and dm-crypt configuration (e.g., stacked with dm-integrity)), etc. An example of a manifest 124 may have a format similar to the following:

```
 {
      "partitions": [
           {
                "partition": "3",
                "root_hash":
 "7d60442f423c0b9d289fc99b35814711a8c3295fbb3491f0bcc0463
 9552ba6e3",
                "hash_tree": "/dev/sda4",
                "UUID": "00b72c14-e32b-4e33-988c-
 002ba91aafec",
          "overlay": "lowerdir"
           },
           {
                "partition": "5",
                "UUID": "9658a77f-60b2-4188-8d9a-
 c6973ecf4970",
                "encryption": "random",
          "overlay": "upperdir,workdir"
           }
      ]
 }
```

In one example, the name and file path of the manifest 124 file on the ESP can be fixed, or it can be passed into the kernel command line (cmdline). For example, a default manifest file name and path can be defined with the option of overriding via kernel cmdline, which can be part of the UKI that is signed for secure boot, and measured into the PCR 120 (e.g., PCR 11 in a list of PCRs on the VM 106). One example of a default name and path can be 00_manifest.json residing directly in the root of the ESP. In this example, initrd 116 can obtain the manifest 124 file using the default path or an override path specified in the kernel 114 cmdline. In addition, in an example, a security version number (SVN) can be included in the manifest 124 to allow for updates to the root filesystem for modifying PCR policies. With any changes to the root filesystem that effect the security configuration of the image, the SVN can be updated.

In another example, to provide flexibility and security, a signature and signer of the manifest 124 file can be used to verify the manifest 124. In an example, before reading and processing the manifest 124, the initrd 116 can verify the manifest signature (e.g., as part of a secure boot process). If the signature fails the verification, the initrd 116 can log the result (e.g., to a console and/or log file on the VM 106) and can terminate the init process. If the signature of the manifest 124 verifies against the manifest with the signer key, then the initrd 116 can measure at least the SVN and signer into the PCR 120 for later attestation. With a kernel cmdline option, e.g., "measure.full," the manifest 124 itself and signature can also be measured. The signature and signer files can be named in alignment with the manifest 124 file (e.g., 00_manifest.json, 00_manifest.json.sig, 00_manifest.json.pem).

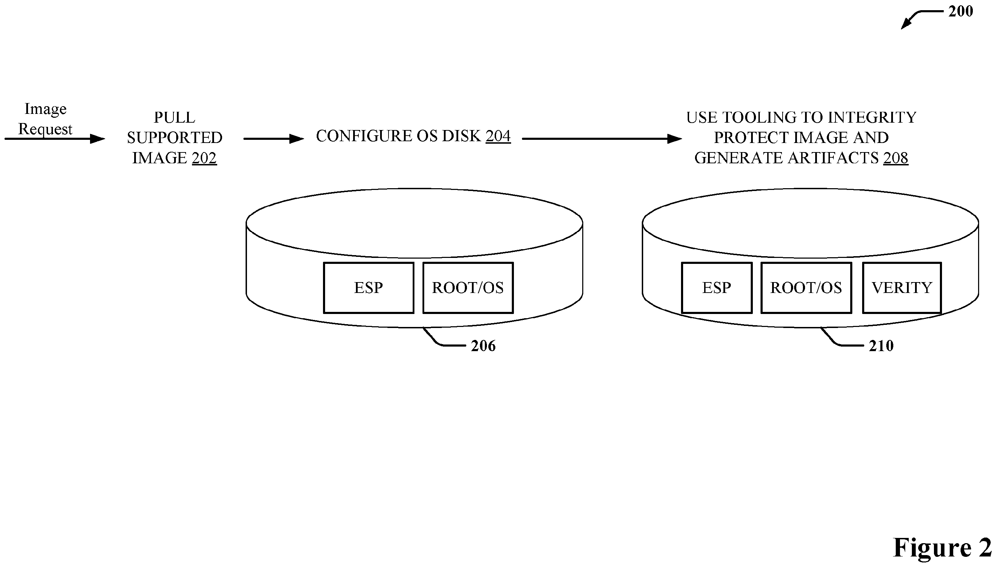

Figure 2 illustrates an example of a process 200 for configuring an OS disk, which may be performed by one or more devices 100. In process 200, an image request can be received. For example, as described, the device(s) 100, or a server managing device(s) 100 or multiple VMs, etc., can receive an image request to load an image on one or more VMs. For example, a client device 130 can request the image be pulled and one or more VMs be configured to execute the image. The supported image can be pulled (e.g., from storage accessible by the device(s) 100) at 202, and an associated OS disk can be configured at 204. The OS disk 206 can be configured at 204 to include a ESP and a root/OS partition, which are generated based on the pulled image to provide associated functionality. For example, the client device 130 may request the image to process data from the client device 130, such as to perform inferencing or other resource intensive process. The VM 106 can accordingly configure the OS disk 204 for providing an associated workload 126, such as a workload to perform data inferencing. In addition, at 208, tooling can be used to integrity protect the image and to generate artifacts. In this regard, for example, the OS disk 210 can be configured to include dm-verity protection and the ESP can be updated to include the manifest 124 (e.g., code and/or artifacts associated with the manifest 124, as described herein). Then, the manifest 124 can be used as described herein - e.g., the initrd 116 can verify the manifest 124 signature and/or measure the manifest 124, an associated SVN or signer, etc., into the PCR 120.

Figure 3 is a flowchart of an example of a method 300 for verifying integrity of a VM based on an OS disk, in accordance with aspects described herein. For example, method 300 can be performed by a device 100 and/or one or more components thereof to facilitate measuring an OS disk component into a PCR and/or using the PCR to provide attestation of the VM. In one example, the one or more processors 102 of the device 100 performing method 300 may include a Bootstrap processor (BSP), e.g., as differentiated from one or more application processors (AP), where the BSP can be dynamically selected to perform the method 300 and/or other boot processing.

In method 300, at action 302, a VM can be initialized including performing, by an initial firmware, a measured boot to measure each of a bootloader and a kernel into a PCR. In an example, an initial firmware 110, e.g., in conjunction with processor(s) 102, memory/memories 104, VM 106, etc., can initialize the VM 106 including performing, by an initial firmware 110, a measured boot to measure each of the bootloader(s) 112 and kernel 114 into a PCR 120. VM 106 can measure other components into the PCR 120 as well, such as initrd 116 (e.g., in Linux VMs). In addition, in an example, initial firmware 110 can also perform a secure boot by verifying a signature associated with one or more of the bootloader(s) 112, kernel 114, and/or initrd 116, and performing the measured boot (or one or more steps thereof) can be conditioned on verifying the signature of the associated component.

In one example, the PCR can be part of a trusted platform module (TPM), and measuring a component into the PCR 120 can include providing a hash of the component to the TPM, where the TPM can extend (or concatenate) the hash in the PCR 120. For example, a PCR extend can refer to the TPM performing an operation on a given hash including concatenating the hash to the present value in the PCR, rehashing the concatenated value, and storing the resulting rehashed value back into the PCR. Thus, for example, measuring the first bootloader into the PCR 120 can include setting the PCR 120 to a hash value of a previous value in the PCR 120 and a hash value of the first bootloader. Each subsequent hash value (e.g., of zero or more other bootloaders 112, the kernel 114, and/or the initrd 116) can be extended to the value in PCR 120, as described above.

In method 300, at action 304, a component of an OS disk of the VM can be measured into the PCR during the measured boot. In an example, an initrd 116 (or another bootloader or component of the boot process), e.g., in conjunction with processor(s) 102, memory/memories 104, VM 106, etc., can measure, during the measured boot, a component of an OS disk of the VM 106 into the PCR 120. For example, as described, initrd 116 can measure one or more of the manifest 124 itself, a SVN of the manifest 124, a signer of the manifest 124 (e.g., an identifier associated with an entity or party, such as a manufacturer or developer of the OS distribution, etc.), a signed version of the manifest 124, and/or the like, into the PCR 120. As described, for example, initrd 116 can measure the component of the OS disk into the PCR 120 by providing a hash of the component of the OS disk to the TPM, and the TPM can concatenate the hash with a value in the PCR 120 and store the concatenation back in the PCR 120. In addition, in this regard, the initrd 116 code can be updated to perform this functionality, but need not change (and need not be rebuilt or resigned) when the OS disk (and thus the manifest 124) changes.

In some examples, the manifest 124 can include additional details of the OS disk or other components of the VM 106 or intended use of the VM 106, etc. to base the integrity of the VM 106 on such details/components/uses. For example, the manifest 124 can include multiple manifests for multiple partitions, disks (e.g., a separate partition or disk for the workload 126), other components (e.g., a GPU), etc.. to ensure integrity of the partitions, disks, or other components on the VM 106.

In method 300, optionally at action 306, a signature or a signer of the component of the OS disk can be verified. In an example, an initrd 116, e.g., in conjunction with processor(s) 102, memory/memories 104, VM 106, etc., can verify the signature or signer of the component of the OS disk. For example, this can be part of a secure boot process, and measuring the component of the OS disk into the PCR 120 can be based on this verification, as described above, such that the component is measured into the PCR 120 if the verification succeeds. For example, initrd 116 can verify the signature or signer of the component of the OS disk based on one or more of the manifest 124 or the signer public key (e.g., by comparing the signature or signer to a known signature or signer and/or to a signature or signer of the UKI).

In method 300, at action 308, a value in the PCR for verifying integrity of the VM can be provided based on a received request. In an example, PCR value providing module 122, e.g., in conjunction with processor(s) 102, memory/memories 104, VM 106, etc., can provide, based on the received request, the value in the PCR 120 for verifying integrity of the VM 106. For example, PCR value providing module 122 can receive a request (e.g., from a client device 130) to provide the value in the PCR 120 and can provide, in response (e.g., to the client device 130), the value from the PCR 120. In an example, the client device 130 can use this value as an attestation for the VM 106 to ensure the OS disk (and other components) of the VM 106 correspond to the expected image (e.g., the image requested by the client device 130). Though shown as a module within the client device 120, in some examples, the verification module 134 can be a module in a different device or system from which the client device 130 can request to verify integrity of the VM 106.

Figure 4 is a flowchart of an example of a method 400 for providing data to a VM based on verifying integrity of the VM, in accordance with aspects described herein. For example, method 400 can be performed by a client device 130 and/or one or more components thereof (e.g., in conjunction with a different device or system) to facilitate verifying the VM 106 and/or accordingly providing data to the VM 106 for use by a workload 126.

In method 400, at action 402, an indication of a component of an OS disk of the VM can be received for a VM. In an example, an image requesting module 132, e.g., in conjunction with processor(s), memory/memories, etc. of the client device 130, can receive, for the VM 106, the indication of the component of the OS disk of the VM 106. In one example, image requesting module 132 can receive (e.g., along with an indication that the requested image is loaded into a VM 106 or otherwise), access to the OS disk at the VM 106, access to the manifest 124, a log file of PCR events on PCR 120, and/or the like. In this regard, for example, image requesting module 132 can receive or otherwise determine the indication of the component of the OS disk of the VM 106 by obtaining a SVN, signature, signer, etc. of the manifest 124, obtaining the manifest 124 itself, hashing the SVN, signature, signer, or manifest 124, etc., obtaining the value in the PCR 120 from the log of PCR events, and/or the like.

In method 400, at action 404, attestation for the VM can be requested based on the indication of the component of the OS disk. In an example, verification module 134, e.g., in conjunction with processor(s), memory/memories, etc. of the client device 130, can request attestation for the VM based on the indication of the component of the OS disk. For example, verification module 134 can provide the indication of the component of the OS disk, or a value computed based on indication of the component of the OS disk (e.g., the SVN, signature, or hash of the SVN, signature, manifest 124, signer, etc.) to the VM 106 for attestation. As described above, the VM 106 can compare the received value with the value from the PCR 120 to provide attestation for the VM 106.

In method 400, at action 406, it can be determined if the attestation is valid. In an example, verification module 134, e.g., in conjunction with processor(s), memory/memories, etc. of the client device 130 (or of a different device or system), can determine if the attestation is valid, e.g., based on a value received from the attestation request. If the attestation is valid, in method 400, at action 408, data can be provided to the VM for processing. In an example, data providing module 136, e.g., in conjunction with processor(s), memory/memories, etc. of the client device 130, can provide the data to the VM 106 for processing based on the attestation being valid. For example, the data may be private data for the third-party operating client device 130, and it may be beneficial to verify the VM 106 integrity before providing the data for operation via workload 126.

In accordance with aspects described herein, using the manifest 124 to measure in the PCR 120 can align with the layering available to discoverable disk images (DDIs). This can allow for updating an image offline in a manner that can be rooted back to the integrity of the original image. For example, the manifests can be layered by name in lexicographic order. Then, the initrd 116 can discover each manifest, verify, and perform measurements in this lexicographic order. The initrd 116 can also set up the protections on the partitions and perform the mount operations. The mount operations can take place in the same order. As the signer key is measured into the PCR 120 for the manifest 124, this can record the ordering and roots the chain of manifests back to the original manifest.

In one example, to layer manifests in support of updating a root filesystem, the following can be performed during image preparation. A new partition can be created, an overlay mount can be created with the existing root filesystem described by any existing manifests as the read only lower layers. and the new partition as the read/write upper layer. Updates can be applied and written to the upper layer. The overlay can be unmounted, and the new partition can be resized to its smallest form. The new partition can be dm-verity protected and a new manifest can be created, signed, and moved to the ESP. The update manifest can be named such that it is greater in lexicographic order than the root manifest. Then, the initrd 116 can process the manifests as mentioned above ensuring that the updates are present, integrity protected, and separate from the root filesystem.. The general approach can be to measure any configuration or components that can contain integrity information or impact the integrity of the OS 108 into a PCR 120. In this example, the partition protections can be measured and/or the overlay can also be measured, as an overlay filesystem over a dm-verity protected partition can change the appearance of integrity from the OS 108 of any existing files in the lower layer. Thus, each component that can impact the integrity of the OS 108 can be measured to the PCR 120, which can be used for attestation at another point in time.

In some examples, measuring the manifest 124 into the PCR 120 for use in subsequent attestation, as described herein, can prevent various system threats. In one specific example, an invalid or replaced manifest threat, which can be caused by an actor with write access to the virtual hard disk (VHD) or potentially anyone attempting to modify the manifest of a running OS, can be mitigated. For example, if the manifest does not verify with the signer and/or signature, the boot process can be halted or terminated, as described above.

In another specific example, a threat of a replaced manifest, signature, and signer, which can be caused by an actor with write access to VHD or potentially anyone attempting to modify the manifest of a running OS, can be mitigated. For example, an attestation verification can show the PCRs do not reflect the expected value.

In another specific example, a threat where a cmdline specifies a malicious manifest, which can be caused by an actor with access to the bootloader/UKI, can be mitigated. For example, the cmdline can be measured into the PCR as well, so the PCR (and the PCR event log, e.g., TCG log) can reflect this difference.

In yet another specific example, a threat where the manifest is replaced to trigger default boot without integrity of OS, which can be caused by an actor with write access to VHD, can be mitigated. For example, the PCR state can be missing several PCR extensions, so any attestation verifications can fail.

In yet another specific example, a threat of modifying PCR values to fake valid PCR values can be mitigated. For example, this may require gaining execution or write access into the vTPM or the TPM driver, but the vTPM implementation may be vetted and measured into a secure encrypted virtualization-secure nested paging (SEV-SNP) report. For example, in a virtual TPM in a confidential VM, the vTPM may be loaded into an isolated memory that is isolated from host and hypervisor on one hand and from the guest OS on the other. In this example, the vTPM measurement can be part of the hardware report, for e.g. AMD SEV-SNP report. In bare metal OS instances, writing to the TPM PCR may be required, which may be prohibited by design.

In yet another specific example, a threat of reordering manifests in layered manifest configuration, which can be caused by an actor with write access to VHD, can be mitigated. For example, manifest signers (possibly other artifacts) can be measured in lexicographic order, so PCR values would not match expected value.

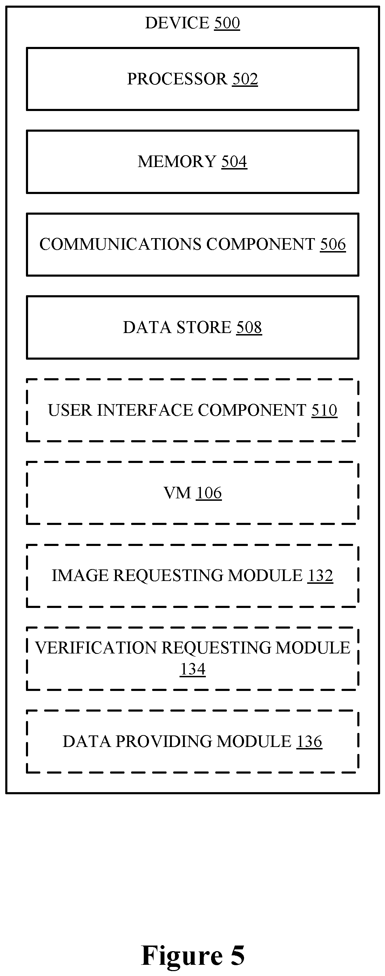

Figure 5 illustrates an example of device 500 including additional optional component details as those shown in Figure 1. In one aspect, device 500 may include processor 502, which may be similar to processor(s) 102 for carrying out processing functions associated with one or more of components and functions described herein. Processor 502 can include a single or multiple set of processors or multi-core processors. Moreover, processor 502 can be implemented as an integrated processing system and/or a distributed processing system.

Device 500 may further include memory 504, which may be similar to memory/memories 104 such as for storing local versions of operating systems (or components thereof) and/or applications being executed by processor 502, such as a VM 106, image requesting module 132, verification requesting module 134, data providing module 136, etc. Memory 504 can include a type of memory usable by a computer, such as random access memory (RAM), read only memory (ROM), tapes, magnetic discs, optical discs, volatile memory, non-volatile memory, and any combination thereof.

Further, device 500 may include a communications component 506 that provides for establishing and maintaining communications with one or more other devices, parties, entities, etc. utilizing hardware, software, and services as described herein. Communications component 506 may carry communications between components on device 500, as well as between device 500 and external devices, such as devices located across a communications network and/or devices serially or locally connected to device 500. For example, communications component 506 may include one or more buses, and may further include transmit chain components and receive chain components associated with a wireless or wired transmitter and receiver, respectively, operable for interfacing with external devices.

Additionally, device 500 may include a data store 508, which can be any suitable combination of hardware and/or software, that provides for mass storage of information, databases, and programs employed in connection with aspects described herein. For example, data store 508 may be or may include a data repository for operating systems (or components thereof), applications, related parameters, etc.) not currently being executed by processor 502. In addition, data store 508 may be a data repository for VM 106, image requesting module 132, verification requesting module 134, data providing module 136, and/or one or more other components of the device 500.

Device 500 may optionally include a user interface component 510 operable to receive inputs from a user of device 500 and further operable to generate outputs for presentation to the user. User interface component 510 may include one or more input devices, including but not limited to a keyboard, a number pad, a mouse, a touch-sensitive display, a navigation key, a function key, a microphone, a voice recognition component, a gesture recognition component, a depth sensor, a gaze tracking sensor, a switch/button, any other mechanism capable of receiving an input from a user, or any combination thereof. Further, user interface component 510 may include one or more output devices, including but not limited to a display, a speaker, a haptic feedback mechanism, a printer, any other mechanism capable of presenting an output to a user, or any combination thereof.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more aspects, one or more of the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), and floppy disk where disks usually reproduce data magnetically, while discs reproduce data optically with lasers. Combinations of the above should also be included within the scope of computer-readable media.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described herein that are known or later come to be known to those of ordinary skill in the art are expressly included and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

**The following is a list of further preferred embodiments of the invention:**
Embodiment 1. A device for verifying integrity of an operating system (OS) disk of a virtual machine, comprising:
   one or more memories storing instructions; and
   one or more processors coupled to the one or more memories and configured to execute the instructions to:
   initialize the virtual machine including performing, by an initial firmware, a measured boot to measure each of a bootloader, a kernel, and a component of the OS disk of the virtual machine into a platform configuration register (PCR); and
   provide, based on a received request, a value in the PCR for verifying integrity of the virtual machine.
Embodiment 2. The device of embodiment 1, wherein the component of the OS disk is a manifest file that includes one or more parameters that describe the OS disk.
Embodiment 3. The device of embodiment 2, wherein the one or more parameters include a root hash of a partition on the OS disk, an indication of an overlay of the partition on the OS disk, or a universally unique identifier of the partition on the OS disk.
Embodiment 4. The device of embodiment 1, wherein the component of the OS disk includes multiple manifest files that each include one or more parameters that describe the OS disk.
Embodiment 5. The device of embodiment 1, wherein the one or more processors are configured to execute the instructions to measure the component of the OS disk into the PCR at least in part by measuring at least a security version number and a signer of the component of the OS disk into the PCR.
Embodiment 6. The device of embodiment 1, wherein the one or more processors are configured to execute the instructions to measure the component of the OS disk into the PCR based at least in part on verifying one or more of a signature of the component of the OS disk or a signer of the signature of the OS disk.
Embodiment 7. The device of embodiment 1, wherein the component of the OS disk is specified in a command line of the kernel.
Embodiment 8. The device of embodiment 1, wherein the one or more processors are configured to execute the instructions to measure an initial ramdisk (initrd) into the PCR during the measured boot, and wherein the initrd measures the component of the OS disk into the PCR.
Embodiment 9. The device of embodiment 8, wherein the initrd verifies a signature associated with the OS disk before measuring the component of the OS disk into the PCR.
Embodiment 10. The device of embodiment 1, wherein the component of the OS disk includes a manifest for one or more other disks or components of the virtual machine that are accessible via the OS disk.
Embodiment 11. A computer-implemented method for verifying integrity of an operating system (OS) disk of a virtual machine, comprising:
   performing, by an initial firmware, a boot process including a measured boot to measure each of a bootloader and a kernel into a platform configuration register (PCR);
   measuring, during the measured boot, a component of the OS disk of the virtual machine into the PCR; and
   providing, to a client device and based on a received request, a value in the PCR for verifying integrity of the virtual machine.
Embodiment 12. The computer-implemented method of embodiment 11, wherein the component of the OS disk is a manifest file that includes one or more parameters that describe the OS disk.
Embodiment 13. The computer-implemented method of embodiment 12, wherein the one or more parameters include a root hash of a partition on the OS disk, an indication of an overlay of the partition on the OS disk, or a universally unique identifier of the partition on the OS disk.
Embodiment 14. The computer-implemented method of embodiment 11, wherein measuring the component of the OS disk into the PCR include measuring at least a security version number and a signer of the component of the OS disk into the PCR.
Embodiment 15. The computer-implemented method of embodiment 11, wherein measuring the component of the OS disk into the PCR is based at least in part on verifying one or more of a signature of the component of the OS disk or a signer of the signature of the OS disk.
Embodiment 16. The computer-implemented method of embodiment 11, wherein the component of the OS disk is specified in a command line of the kernel.
Embodiment 17. The computer-implemented method of embodiment 11, further comprising measuring, during the measured boot, an initial ramdisk (initrd) into the PCR, wherein the initrd measures the component of the OS disk into the PCR.
Embodiment 18. The computer-implemented method of embodiment 17, wherein the initrd verifies a signature associated with the OS disk before measuring the component of the OS disk into the PCR.
Embodiment 19. A non-transitory computer-readable device storing instructions thereon that, when executed by at least one computing device, cause the at least one computing device to verify integrity of an operating system (OS) disk of a virtual machine, comprising:
   initializing the virtual machine including performing, by an initial firmware, a measured boot to measure each of a bootloader and a kernel into a platform configuration register (PCR);
   measuring, during the measured boot, a component of the OS disk of the virtual machine into the PCR at least in part by providing a hash of the component to a trusted platform module (TPM); and
   providing, based on a received request, a value in the PCR for verifying integrity of the virtual machine.
Embodiment 20. The non-transitory computer-readable device of embodiment 19, wherein the component of the OS disk is a manifest file that includes one or more parameters that describe the OS disk.

## Claims

1. A device (100) for verifying integrity of an operating system, OS, disk of a virtual machine, comprising:
one or more memories (104) storing instructions; and
one or more processors (102) coupled to the one or more memories and configured to execute the instructions to:
initialize the virtual machine including performing, by an initial firmware, a measured boot to measure each of a bootloader, a kernel, and a component of the OS disk of the virtual machine into a platform configuration register, PCR; and
provide, based on a received request, a value in the PCR for verifying integrity of the virtual machine.

2. The device of claim 1, wherein the component of the OS disk is a manifest file that includes one or more parameters that describe the OS disk.

3. The device of claim 2, wherein the one or more parameters include a root hash of a partition on the OS disk, an indication of an overlay of the partition on the OS disk, or a universally unique identifier of the partition on the OS disk.

4. The device of claim 1, wherein the component of the OS disk includes multiple manifest files that each include one or more parameters that describe the OS disk.

5. The device of claim 1, wherein the one or more processors are configured to execute the instructions to measure the component of the OS disk into the PCR at least in part by measuring at least a security version number and a signer of the component of the OS disk into the PCR.

6. The device of claim 1, wherein the one or more processors are configured to execute the instructions to measure the component of the OS disk into the PCR based at least in part on verifying one or more of a signature of the component of the OS disk or a signer of the signature of the OS disk.

7. The device of claim 1, wherein the component of the OS disk is specified in a command line of the kernel.

8. The device of claim 1, wherein the one or more processors are configured to execute the instructions to measure an initial ramdisk, initrd, into the PCR during the measured boot, and wherein the initrd measures the component of the OS disk into the PCR.

9. The device of claim 8, wherein the initrd verifies a signature associated with the OS disk before measuring the component of the OS disk into the PCR.

10. The device of claim 1, wherein the component of the OS disk includes a manifest for one or more other disks or components of the virtual machine that are accessible via the OS disk.

11. A computer-implemented method (300) for verifying integrity of an operating system, OS, disk of a virtual machine, comprising:
performing (302), by an initial firmware, a boot process including a measured boot to measure each of a bootloader and a kernel into a platform configuration register, PCR;
measuring (304) , during the measured boot, a component of the OS disk of the virtual machine into the PCR; and
providing (308), to a client device and based on a received request, a value in the PCR for verifying integrity of the virtual machine.

12. The computer-implemented method of claim 11, wherein the component of the OS disk is a manifest file that includes one or more parameters that describe the OS disk.

13. The computer-implemented method of claim 12, wherein the one or more parameters include a root hash of a partition on the OS disk, an indication of an overlay of the partition on the OS disk, or a universally unique identifier of the partition on the OS disk.

14. The computer-implemented method of claim 11, wherein measuring the component of the OS disk into the PCR include measuring at least a security version number and a signer of the component of the OS disk into the PCR.

15. A non-transitory computer-readable device storing instructions thereon that, when executed by at least one computing device, cause the at least one computing device to perform one or more of the computer-implemented methods of claims 11-14.
